# EUROPEAN PATENT APPLICATION

(11) **EP 1 384 751 A1**
(43) Date of publication of application: **28.01.2004**
(21) Application number: 02078183.7
(22) Date of filing: 25.07.2002
(51) Int. Cl.: C08L 23/06, C08L 23/04, B65D 1/00

(54) **Container formed from multimodal ethylene polymer**

(71) Applicant: SOLVAY POLYOLEFINS EUROPE - BELGIUM (Société Anonyme), 1050 Bruxelles (BE)
(72) Inventor: Gorgerin, Michel, 7062 Soignies (BE)
(74) Representative: Smith, Julian Philip Howard

(57) **Abstract**

A container is disclosed comprising a multimodal ethylene polymer having a standard density of at least 950 kg/m³ and a fluidity index MI₂ of from 1 to 10 g/10 min, said multimodal ethylene polymer comprising:
from 20 to 65 wt%, based on the total weight of the multimodal ethylene polymer, of a fraction comprising ethylene polymer (A) having a density of more than 965 kg/m³ and a fluidity index MI₂ (A) of at least 10 g/10 min; and
from 80 to 35 wt %, based on the total weight of the multimodal ethylene polymer, of a fraction comprising a copolymer (B) of ethylene and at least one alpha-olefin containing from 3 to 12 carbon atoms, and having a fluidity index MI₂ (B) of less than 10 g/min and a content of said alpha-olefin(s) of 0.1 to 5 mol%.

## Description

The present invention relates to containers comprising a composition based on multimodal ethylene polymer. It also relates to a process for manufacturing said containers and their use as bottles containing foodstuffs, and more particularly milk.

It is known to use polyethylene, and more particularly bimodal polyethylene, for the manufacture of containers. For example, WO 01/14122 discloses large (>2L, preferably at least 30L) containers made from blow-moulded HDPE having a density of 945-960 kg/m³ and MI₂₁ of 3-8 g/10min, and comprising bimodal HDPE made by first forming a high-density homopolymer and then forming a low-density copolymer, the high-density homopolymer comprising about 45-50wt% of the composition. US 6194520 discloses bimodal polymer blends suitable for blow-moulding typically having an MI₂₁ of at least 2 g/10m and a flow ratio (MI₂₁/MI₂) of at least 60. These are made by first forming a low-density block preferably comprising 45-50wt% of the composition and then the high-density block. Although blow-moulding into small bottles is mentioned, there is no discussion of the stiffness of the bottles.

Despite the above disclosure relating to small bottles, commercially produced small bottles such as those for milk are currently typically made from monomodal polymers derived from a chromium or titanium catalyst. There is a continuing desire to reduce the weight of such bottles whilst maintaining the physical properties such as stress crack resistance and stiffness.

We have discovered a multimodal composition for bottles which provides improved stiffness compared with conventional bottles, and hence enables such a weight reduction. The compositions can also have an increased density without reducing the stress crack resistance, which permits improved processing.

Accordingly in a first aspect the present invention provides a container comprising a multimodal ethylene polymer having a standard density of at least 935 kg/m³ and a fluidity index MI₂ of from 1 to 10 g/10 min, wherein said multimodal ethylene polymer comprises:
from 20 to 65 wt%, based on the total weight of the multimodal ethylene polymer, of a fraction comprising ethylene polymer (A) having a density of more than 950 kg/m³ and a fluidity index MI₂ (A) of at least 10 g/10 min; and
from 80 to 35 wt %, based on the total weight of the multimodal ethylene polymer, of a fraction comprising a copolymer (B) of ethylene and at least one alpha-olefin containing from 3 to 12 carbon atoms, and having a fluidity index MI₂ (B) of less than 10 g/min and a content of said alpha-olefin(s) of 0.1 to 5 mol%.

Preferably the container is less than 2L in size, and preferably comprises a single layer of the above-defined polymer. However containers made of several layers of different resins, one or more or all of which is as defined above, are also within the scope of the invention.

It is also preferred that the amount of ethylene polymer (A) is from 30 to 40wt%.

A further aspect of the invention provides a container comprising ethylene polymer having a standard density of at least 935 kg/m³, a fluidity index MI₂ of from 1 to 10 g/10 min, a Vicat point of at least 126.5°C and a resistance to slow cracking, measured according to ASTM D 1693 (1980), condition A of at least 60 hours. The ethylene polymer of this aspect of the invention is preferably multimodal.

By « multimodal ethylene polymer » is meant an ethylene polymer comprising at least two fractions having different fluidity indices (MI₂) so that it possesses a broad or multimodal molecular weight distribution. For the purposes of this invention, the term « multi-modal » need not necessarily be taken to mean that the GPC of the final multi-modal polymer exhibits two distinct molecular weight peaks.

The (multimodal) ethylene polymer used in the present invention has generally a standard density which does not exceed 965 kg/m³. For the purposes of the present invention, the standard density is measured according to the standard ISO 1183-3 (1999). The standard density preferably does not exceed 962 kg/m³, more particularly not 958 kg/m³. The standard density is preferably at least 951 kg/m³, more preferably at least 955 kg/m³.

We have found that small (<2L) containers of the invention have a stiffness as measured by load at maximum load crushing which can be more than 10% better than that of conventional bottles. Furthermore, they can be made at a higher density without reducing the stress crack resistance. Higher densities are particularly valuable for the long-life milk market, where it is necessary to sterilise the bottles with steam; a higher density means that the sterilisation temperature can be raised, thereby shortening the sterilisation period and increasing throughput. With monomodal polymers, such an increase in density would result in poorer stress crack resistance. However the compositions of the invention maintain excellent ESCR values even as the density is increased.

The ethylene polymer used in the present invention preferably possesses a fluidity index (MI₂) measured at 190°C under a load of 2.16 kg according to the standard ASTM D 1238 (1998) of less than 4 g/10 min. MI₂ values of less than 2 g/10 min are particularly preferred. The fluidity index MI₂ is at least 1 g/10 min, preferably at least 1.2 g/10 min. Fluidity indices of 1.4 to 1.8 g/10 min are particularly preferred.

Preferably the standard density of the ethylene polymer is at least 950 kg/m³. It is also preferred that the ethylene polymer used in the present invention has a molecular weight distribution Mw/Mn of no more than 9. However it is preferably at least 5. The ratio MI₂(A) /MI₂ is preferably from 5 to 200.

Preferably the standard density of the ethylene polymer (A) in the ethylene polymer of the invention is more than 965 kg/m³. The fraction of ethylene polymer (A) is preferably at least 30% by weight compared with the total weight of the multimodal ethylene polymer. The fraction of ethylene polymer (A) preferably does not exceed 45 wt%, more particularly it does not exceed 40 wt % compared with the total weight of the multimodal ethylene polymer.

Correspondingly, the fraction of ethylene copolymer (B) in the multimodal ethylene polymer is preferably at least 55%, more particularly at least 60 wt % by weight compared with the total weight of the multimodal ethylene polymer. The fraction of ethylene copolymer (B) preferably does not exceed 70 wt %.

The composition used in the present invention generally contains at least 95%, preferably at least 98 % by weight of the whole of the polymer (A) and the copolymer (B). Most particularly preferred is a composition consisting substantially only of polymer (A) and copolymer (B).

Preferably, the polymer (A) is an ethylene homopolymer. For the purposes of the present invention, « ethylene homopolymer » means an ethylene polymer consisting mainly of monomer units of ethylene and substantially devoid of monomer units derived from other olefins. However polymer (A) may also be an ethylene copolymer with one or more alpha-olefins containing from 3 to 12 carbon atoms.

By ethylene copolymer with one or more alpha-olefins containing from 3 to 12 carbon atoms (copolymer (B)) is meant a copolymer comprising monomer units derived from ethylene and monomer units derived from at least one alpha-olefin containing from 3 to 12 atoms of carbon. The alpha-olefin may be selected from among olefinically unsaturated monomers such as butene-1, pentene-1, hexene-1, octene-1. Butene-1 is particularly preferred. The content of alpha-olefin in the copolymer (B) is preferably at least equal to 0.2 mol%, in particular at least equal to 0.3 mol%. The content of alpha-olefin in the copolymer (B) is most preferably no more than 4 mol%, and particularly no more than 3 mol%. Particularly good results are obtained with alpha-olefin contents in the copolymer (B) of 0.5 to 2 mol%.

The standard density SD of the polymer (A) [SD(A)] is preferably at least 968 kg/m³, more particularly at least 970 kg/m³. Preferably, polymer (A) is characterised by an MI₂CA) of at least 30 g/10 min, more particularly at least 50 g/10 min. Preferably, the value of MI₂ (A) does not exceed 500 g/10 min, values of less than 400 g/10 min being particularly preferred. Fluidity indices MI₂(A) of 80 to 200 g/10 min have given good results.

Copolymer (B) preferably has an MI₂(B) of at least 0.03 g/10 min, more particularly of at least 0.06 g/10 min. An MI₂(B) of at least 0.08 g/10 min is most preferred. The MI₂(B) preferably does not exceed 2 g/10 min, values of no more than 1 g/10 min being particularly preferred. Most preferred are MI₂(B) values of 0.08 to 0.8 g/10 min.

The multimodal ethylene polymer used in the present invention may be obtained by any suitable technique. It is possible, for example, to perform the mixing of polymer (A) and copolymer (B) by any known process such as, for example, the molten mixing of the two preformed polymers. The polymer may also be produced in a single reactor using multi-catalysts to generate the different, desired polymer components. For example polymer (A) would be formed using a catalyst with a sufficiently different comonomer incorporation and molecular weight potential at given hydrogen and comonomer composition in the polymerisation reactor to that of the catalyst used to produce copolymer (B) such that the desired bi-modal or multi-modal polymer is produced. The different catalysts selected may be co-supported, separately supported or unsupported. Preferred, however, are processes in which polymer (A) and copolymer (B) are prepared in at least two successive polymerisation stages. Whilst the polymers may be produced in any order, it is particularly preferred that the preparation of polymer (A) is performed first and then the preparation of the copolymer (B) in the presence of the polymer (A) obtained from the first polymerisation stage. Preferably polymer (A) is produced in the absence of any alpha-olefins containing more than 3 carbon atoms. The polymerisation stages may each be carried out, independently of one another, in suspension in an inert hydrocarbon diluent or in gaseous phase. A process comprising at least two polymerisation stages in suspension in a hydrocarbon diluent is preferred. The hydrocarbon diluent is generally chosen from among aliphatic hydrocarbons containing from 3 to 10 carbon atoms. Preferably, the diluent is chosen from among propane, isobutane, hexane or their mixtures.

In addition to the multimodal ethylene polymer, the composition used in the present invention may contain conventional additives such as antioxidants, antacids, UV stabilisers, dyes, fillers, antistatic agents and lubricating agents. The total content of additives is typically 5 wt % compared with the total weight of the composition used in the present invention. For white grade milk bottles for example, 1 or 4.5wt% pigment (TiO2) is used.

The final composition used for the manufacture of containers according to the invention may be obtained by any suitable known means. It is possible, for example, to employ two successive stages, comprising first mixing the multimodal ethylene polymer and where applicable the additives at ambient temperature, and then continuing the mixing in the molten state in an extruder. The temperature of the second stage is generally from 100 to 300°C, in particular from 120 to 250°C, more particularly from about 130 to 210°C. An alternative method consists of introducing the additives and where applicable the other compounds into the already molten multimodal ethylene polymer.

It is also possible to prepare initially a masterbatch comprising a first fraction of the multimodal ethylene polymer and any additives, the masterbatch being rich in additives and optionally in other compounds. The masterbatch is then mixed with the remaining fraction of the multimodal ethylene polymer, for example during the manufacture of granules of the composition.

The containers according to the invention may be obtained by any known technique for the manufacture of objects. Extrusion blow-moulding, injection blow-moulding and injection-stretch blow moulding are all suitable.

The examples which are described below serve to illustrate the invention. The meanings of the symbols used in these examples, the methods of measurement and the units of these quantities are explained below:
[A]: fraction of ethylene polymer (A) expressed in wt % compared with the total weight of the multimodal ethylene polymer.
[B]: fraction of ethylene copolymer (B) expressed in wt % compared with the total weight of the multimodal ethylene polymer.

MI₂: fluidity index of the multimodal ethylene polymer, expressed in g/10 min, measured at 190°C under a load of 2.16kg according to the standard ASTM D 1238 (1998).

MI₂ (A): fluidity index of the ethylene polymer (A), expressed in g/10 min, measured at 190°C under a load of 2.16 kg according to the standard ASTM D 1238 (1998); in cases where the multimodal ethylene polymer is manufactured by a process of two successive polymerisation stages, said value is measured on a sample of the polymer (A) taken from the first reactor.

MI₂ (B): fluidity index of the ethylene copolymer (B), expressed in g/10 min, measured at 190°C under a load of 2.16 kg according to the standard ASTM D 1238 (1998); in cases where the multimodal ethylene polymer is manufactured by a process of two successive polymerisation stages, said value is calculated on the basis of the MI₂ and MI ₂ (A) values.

SD: standard density of the multimodal ethylene polymer, expressed in kg/m³, measured according to the standard ISO 1183-3 (1999).

SD (A): standard density of the ethylene polymer (A), expressed in kg/m³, measured according to the standard ISO 1183-3 (1999); in cases where the multimodal ethylene polymer is manufactured by a process of two successive polymerisation stages, said value is measured on a sample of the polymer (A) taken from the first reactor.

SCB (B): comonomer content of copolymer (B) as measured by the number of short-chain branches per 1000 C.

ESCR-A : resistance to slow cracking, expressed in hours, measured according to the standard ASTM D 1693 (1980), condition A, by immersion in an aqueous solution containing 10 vol% of nonylphenoxypoly(ethyleneoxy)ethanol at 50°C, of a plate obtained by compression of the composition used in the present invention according to the standard ASTM D 1928 (1980).

Stiffness: Empty bottles are crushed at 23°C at a constant speed (5mm/minute). The crushing machine measures the force needed to maintain the crushing speed, which depends on the degree of crushing. This crushing force curve has a maximum called the Top Load, measured in N.

Vicat point (1kg load): According to ASTM 1525, the softening temperature of the resin is determined by measuring the temperature at which a specified type of needle loaded with 1kg can pass through the sample.

### EXAMPLES 1-3

A composition comprising the following was blow-moulded using a Stork wheel machine into 1L bottles:
- 95.3 parts by weight of multimodal ethylene polymer manufactured by the same general process as disclosed in EP-A-603935;
- 4.5 parts by weight TiO₂ (for Examples 2 and 3 only);
- 0.05 parts by weight of calcium stearate;
- 0.05 parts by weight hydrotalcite ;
- 0.08 parts by weight Irganox B900.

The characteristics of the multimodal ethylene polymers used in the Examples are given in Table 1 below.

The characteristics of the bottles obtained are also given in Table 1 below. Example 1 was a natural colour resin -ie with no pigment- whilst Examples 2 and 3 were white.

### EXAMPLES 4-5 (comparative)

Compositions were blow-moulded into bottles as in Examples 1 to 3, except that instead of the above multimodal polymer, a monomodal ethylene polymer also produced using a Ziegler catalyst was used, whose characteristics are given in Table 1 below. The other additives in the composition were identical. SEC analysis showed the overall molecular weight distribution of these polymers to be very similar to those of Examples 1 to 3.

A comparison of Example 2 with Example 5 shows that the bottles according to the invention have a superior stiffness compared with those formed from monomodal polyethylene having a similar MI₂. This means that the bottles of the invention can be made lighter without any loss of performance. Furthermore, the higher density of the bottle of Example 2 compared with that of Example 5 results in a higher Vicat point, which permits a higher sterilisation temperature to be used, resulting in shorter sterilisation times. With monomodal polymers, such an increase in density would result in poorer stress crack resistance. However it can be seen here that the ESCR values of Examples 1-3 are substantially better than those of Examples 4 and 5.

**Table 1**

| Property | Units | Ex. 1 | Ex. 2 | Ex. 3 | Ex. 4 | Ex. 5 |
|---|---|---|---|---|---|---|
| Type | | Bimodal natural | Bimodal white | Bimodal white | Mono modal natural | Mono modal white |
| MI₂ | g/10 min | 1.9 | 1.9 | 1.7 | 1.8 | 1.8 |
| Flake SD* | kg/m³ | 954.7 | 955 | 955 | 956.0 | 952.0 |
| Mw | | | 120005 | | 128280 | 120810 |
| Mn | | | 17103 | | 19092 | 21005 |
| Mw/Mn | | | 7.02 | | 6.72 | 5.75 |
| MI₂(A) | g/10 min | 76.6 | 76.2 | 72.5 | - | - |
| SD(A) | kg/m³ | 970.1 | 969.6 | 970.1 | - | - |
| MI₂(B) | g/10 min | | | | - | - |
| [A] | wt % | 35 | 35 | 35 | - | - |
| [B] | wt% | 65 | 65 | 65 | - | - |
| SCB (B) | /1000C | 1.6 | 1.6 | 1.6 | 0.3-0.5^{∧} | 1.3-1.5^{^} |
| ESCR-A | hour | 71.4 | 61.9 | 71.7 | | 25^{#} |
| Stiffness: Top load | N | | 723 | | | 626.9 |
| Vicat point | °C | | 126.7 | | 127.3 | 125.5 |

| | | | | | | |
|---|---|---|---|---|---|---|
| * density of resin before addition of additives | | | | | | |
| ^ value for whole resin | | | | | | |
| # average value | | | | | | |

## Claims

1. Container comprising a multimodal ethylene polymer having a standard density of at least 935 kg/m³ and a fluidity index MI₂ of from 1 to 10 g/10 min, said multimodal ethylene polymer comprising:
from 20 to 65 wt%, based on the total weight of the multimodal ethylene polymer, of a fraction comprising ethylene polymer (A) having a density of more than 950 kg/m³ and a fluidity index MI₂ (A) of at least 10 g/10 min; and
from 80 to 35 wt %, based on the total weight of the multimodal ethylene polymer, of a fraction comprising a copolymer (B) of ethylene and at least one alpha-olefin containing from 3 to 12 carbon atoms, and having a fluidity index MI₂ (B) of less than 10 g/min and a content of said alpha-olefin(s) of 0.1 to 5
mol%.

2. Container comprising ethylene polymer having a standard density of at least 935 kg/m³, a fluidity index MI₂ of from 1 to 10 g/10 min, a Vicat point of at least 126.5°C and a resistance to slow cracking, measured according to ASTM D 1693 (1980), condition A of at least 60 hours.

3. Container according to claim 1, wherein the standard density of the ethylene polymer (A) is more than 965 kg/m³.

4. Container according to any preceding claim, wherein the proportion of ethylene polymer (A) is from 30 to 40 wt%.

5. Container according to any preceding claim, wherein the standard density of the ethylene polymer is at least 950 kg/m³.

6. Container according to any preceding claim, which has a volume of less than 2L.

7. Container according to any preceding claim, which is formed only of said ethylene polymer.

8. Container according to any preceding claim, wherein polymer (A) is a homopolymer of ethylene.

9. Container according to any preceding claim, wherein the ethylene polymer has a fluidity index MI₂ of from 1 to 3 g/10 min.

10. Container according to any preceding claim, wherein the ethylene polymer has a density of no more than 962 kg/m³.

11. Container according to any preceding claim, wherein the ethylene polymer has a Mw/Mn of 9 or less.

12. Container according to any preceding claim, wherein the ethylene polymer has a Mw/Mn of at least 5.

13. Container according to any preceding claim, wherein the ethylene polymer has a ratio MI₂(A) /MI₂ of from 5 to 200.

14. Container according to any preceding claim, wherein the MI₂ (B) is from 0.08 to 0.8 g/10 min.

15. Container according to any preceding claim, wherein the copolymer (B) comprises units derived from ethylene and butene-1.

16. Container according to any preceding claim, wherein the ethylene polymer is obtained by polymerisation in at least two reactors connected in series.

17. Container according to any preceding claim, which is a bottle.

18. Bottle according to claim 16, which has been sterilised.

19. Use of a container as defined in any preceding claim for long-life milk.
